(19) Europäisches Patentamt
European Patent Office
Office européen des brevets

(11) **EP 3 666 451 B1**

(12) **EUROPEAN PATENT SPECIFICATION**

(45) Date of publication and mention of the grant of the patent:
**03.03.2021 Bulletin 2021/09**

(21) Application number: **18900562.2**

(22) Date of filing: **18.10.2018**

(51) Int Cl.:
*B23K 26/70* (2014.01)
*B23K 26/34* (2014.01)
*B23K 26/08* (2014.01)
*B23K 26/144* (2014.01)
*B23K 26/342* (2014.01)
*B23K 37/04* (2006.01)
*B33Y 30/00* (2015.01)
*B33Y 10/00* (2015.01)
*B22F 3/105* (2006.01)
*B23K 26/14* (2014.01)
*B23K 37/00* (2006.01)

(86) International application number:
**PCT/JP2018/038825**

(87) International publication number:
**WO 2020/079799 (23.04.2020 Gazette 2020/17)**

(54) **ADDITIVE MANUFACTURING MACHINE AND COOLING METHOD**

MASCHINE ZUR GENERATIVEN FERTIGUNG UND KÜHLVERFAHREN

MACHINE DE FABRICATION ADDITIVE ET PROCÉDÉ DE REFROIDISSEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.06.2020 Bulletin 2020/25**

(73) Proprietor: **Mitsubishi Electric Corporation Tokyo 100-8310 (JP)**

(72) Inventors:
• **TAMURA, Masayoshi**
 **Tokyo 1008310 (JP)**
• **HORIGUCHI, Takayoshi**
 **Tokyo 1008310 (JP)**
• **HORIO, Kazuya**
 **Tokyo 1008310 (JP)**

(74) Representative: **Diehl & Partner Patent- und Rechtsanwaltskanzlei mbB Erika-Mann-Straße 9 80636 München (DE)**

(56) References cited:
WO-A1-96/29192          WO-A1-2017/103849
JP-A- S61 296 989       JP-A- 2009 113 048
JP-A- 2012 176 442      JP-A- 2016 124 252
JP-A- 2017 522 448      US-A- 4 851 061
US-A1- 2018 085 826

**Description**

The present invention relates to an additive manufacturing processing machine and a cooling method, see respectively claims 1 and 10.

Background

A laser beam machine performs a process of making a hole in a workpiece and a process of cutting the workpiece by irradiating the workpiece with laser light. The following problem may arise in the laser beam machine in some cases. Parts provided around a workpiece are damaged due to an increase in temperature while being heated by direct irradiation with laser light or indirect irradiation with reflection from the workpiece.

Patent Literature 1 discloses a laser beam machine that includes a heat barrier having a high thermal conductivity, laid on the top of a heat insulating layer, and parts provided below the heat insulating layer on a table on which a workpiece is to be placed so as to make a hole in the workpiece and cut the workpiece. The laser beam machine disclosed in Patent Literature 1 reduces heat conduction to the heat insulating layer by absorbing heat generated by laser light irradiation into the heat barrier and releasing the heat. Accordingly, heat conduction to the parts provided below the heat insulating layer is also reduced to prevent the parts from being damaged.

Citation List

Patent Literature

Patent Literature 1: Japanese Utility Model Application Laid-open No. 60-103588

Summary

Technical Problem

The laser beam machine, which performs a process of making a hole in a workpiece and a process of cutting the workpiece, performs the process of making a hole and the cutting process by melting a portion of the workpiece by laser light and removing the melted portion. The portion melted by the laser light reaches a high temperature. However, parts are less likely to be damaged due to heat conducted from the workpiece. This is because the melted portion is removed as waste material from the workpiece.

An example of a laser cutting device is known from US 4,851,061 A. Examples of additive manufacturing processing methods and machines are known from WO 2017/103849 A1 (basis for the preamble of claim 1) and WO 96/29192 A1. The additive manufacturing processing machine is a processing machine using laser light. A material melted by laser light irradiation coagulates and remains as a shaped object on a table in the additive manufacturing processing machine. That is, in the additive manufacturing processing machine, the high-temperature material melted by laser light remains on the table without being removed. Therefore, parts are heated not only by direct irradiation and indirect irradiation with laser light but also by heat conducted from the high-temperature shaped object. Therefore, the additive manufacturing processing machine requires further measures against heat so as to reduce heat conduction to the parts.

The present invention has been made in view of the above, and has its object to obtain an additive manufacturing processing machine capable of reducing conduction of heat from a shaped object to parts.

Solution to Problem

In order to solve the above-described problems and achieve the object, an additive manufacturing processing machine according to the present invention is defined in claim 1, and includes a laser emission unit that emits laser light; a material supply unit that supplies a molten material to be melted by the laser light to an optical path of the laser light; and a workpiece holding unit capable of holding a workpiece on which a shaped object is to be formed by the molten material. The workpiece holding unit includes: a first plate; a second plate provided closer to the laser emission unit than the first plate; and a plurality of fins sandwiched between the first plate and the second plate. A thermal conductivity of the first plate is equal to or lower than low thermal conductivities of the second plate and the fins.

Further according to the present invention, a cooling method using such additive manufacturing processing machine is defined in claim 10.

Advantageous Effects of Invention

The additive manufacturing processing machine according to the present invention can achieve an effect of reducing conduction of heat from a shaped object to parts.

Brief Description of Drawings

FIG. 1 is a perspective view of an additive manufacturing processing machine according to a first embodiment of the present invention.
FIG. 2 is an enlarged view of a portion A illustrated in FIG. 1.
FIG. 3 is an enlarged view of a portion B illustrated in FIG. 2.
FIG. 4 is a perspective view of a workpiece holding unit in the first embodiment.
FIG. 5 is a diagram illustrating a variation of the workpiece holding unit in the first embodiment.
FIG. 6 is a view illustrating a variation of a support unit in the first embodiment, and is a perspective view of the support unit which has been disassembled.
FIG. 7 is a plan view of the support unit according to the variation of the first embodiment.
FIG. 8 is a cross-sectional view taken along line VIII-VIII illustrated in FIG. 7.
FIG. 9 is a view illustrating another variation of the support unit in the first embodiment, and is a perspective view of the support unit which has been disassembled.
FIG. 10 is a plan view of the support unit according to the another variation of the first embodiment.
FIG. 11 is a cross-sectional view taken along line XI-XI illustrated in FIG. 10.
FIG. 12 is a cross-sectional view taken along line XII-XII illustrated in FIG. 10.
FIG. 13 is a diagram for describing a method for cooling a shaped object in the additive manufacturing processing machine according to the first embodiment.
FIG. 14 is a view illustrating still another variation of the support unit in the first embodiment.
FIG. 15 is a perspective view of the support unit of the additive manufacturing processing machine according to the first embodiment, and is a diagram illustrating an example of providing air intake ducts.
FIG. 16 is an enlarged view of a portion F illustrated in FIG. 15.
FIG. 17 is a plan view of the support unit of the additive manufacturing processing machine according to the first embodiment, and is a diagram illustrating the example of providing the air intake ducts.
FIG. 18 is a cross-sectional view taken along line XVIII-XVIII illustrated in FIG. 17.

Description of Embodiments

Hereinafter, an additive manufacturing processing machine and a cooling method according to an embodiment of the present invention will be described in detail with reference to the drawings. It should be noted that the present invention is not limited to the embodiment.

First Embodiment.

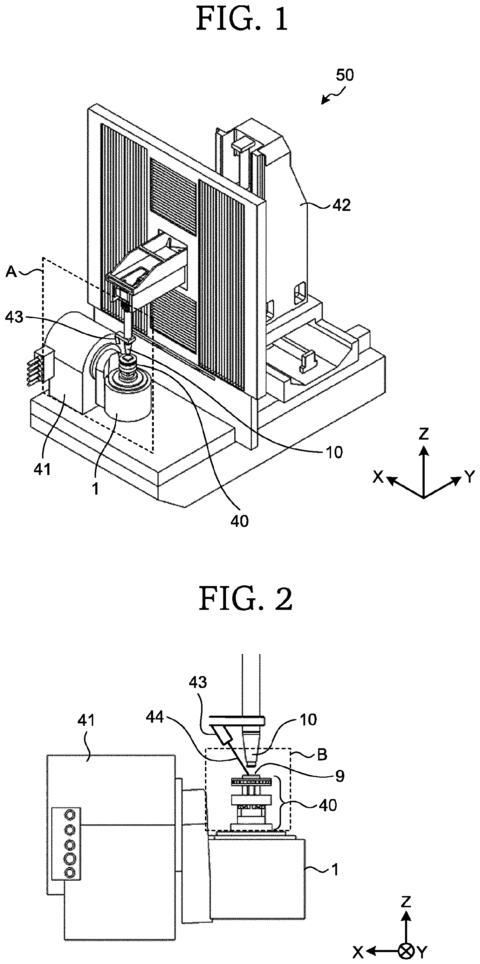

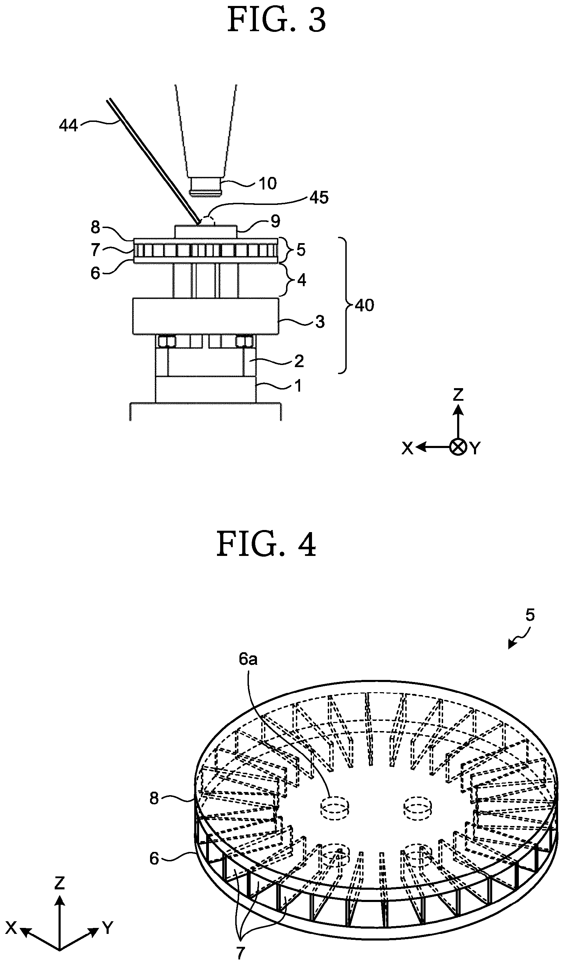

FIG. 1 is a perspective view of an additive manufacturing processing machine according to a first embodiment of the present invention. FIG. 2 is an enlarged view of a portion A illustrated in FIG. 1. FIG. 3 is an enlarged view of a portion B illustrated in FIG. 2. It should be noted that description will be provided below based on a Z-axis, an X-axis, and a Y-axis defined as follows. The Z-axis is an axis along a vertical direction. The X-axis is orthogonal to the Z-axis. The Y-axis is orthogonal to the Z-axis and the X-axis.
FIG. 1 illustrates an additive manufacturing processing machine 50. A cover that covers the outside thereof has been omitted in FIG. 1. The additive manufacturing processing machine 50 includes a movable table 1, a support unit 40, a table drive unit 41, a laser emission unit 10, an emission-unit drive unit 42, and a wire supply unit 43. The additive manufacturing processing machine 50 is an apparatus that melts a wire 44 supplied from the wire supply unit 43 as a material supply unit, and forms a shaped object in a desired shape by use of the melted wire 44.
The movable table 1 can change its position by being driven by the table drive unit 41. For example, an electric motor (not illustrated) provided in the table drive unit 41 causes the movable table 1 to rotate around a rotation axis parallel to the X-axis, so that the movable table 1 can change its position.
The support unit 40 is attached to the movable table 1. The support unit 40 includes a chuck 2, a metal pallet 3, a heat insulating mechanism 4, and a workpiece holding unit 5, stacked on the movable table 1 in this order toward the laser emission unit 10.

The chuck 2 is fixed on the top surface of the movable table 1. The metal pallet 3 is detachably attached to the chuck 2. The heat insulating mechanism 4 is connected to the metal pallet 3. The workpiece holding unit 5 is connected to the heat insulating mechanism 4.

The heat insulating mechanism 4 has a structure for increasing thermal resistance between the workpiece holding unit 5 and the metal pallet 3. The structure has been adopted so as to reduce conduction of heat from the workpiece holding unit 5 to the metal pallet 3. The thermal resistance is a value of the length of a heat transfer path divided by the cross-sectional area and thermal conductivity of the heat transfer path. Thus, in order to increase the thermal resistance between the workpiece holding unit 5 and the metal pallet 3, the heat insulating mechanism 4 is formed by use of a low thermal conductivity material such as zirconia, brick, a cement-based heat insulating material, or a calcium silicate-based heat insulating material. Furthermore, the heat insulating mechanism 4 is formed such that the heat insulating mechanism 4 has a structure with a smaller heat transfer area, such as a porous structure or a honeycomb structure. In addition, the heat insulating mechanism 4 is formed such that, for example, the distance between the metal pallet 3 and the workpiece holding unit 5, which corresponds to the length of a heat transfer path, is made longer.

FIG. 4 is a perspective view of the workpiece holding unit in the first embodiment. The workpiece holding unit 5 includes a first plate 6, a plurality of fins 7, and a second plate 8 arranged in order from the movable table 1 toward the laser emission unit 10. The workpiece holding unit 5 has a structure in which the plurality of fins 7 are sandwiched between the first plate 6 and the second plate 8.

The first plate 6 is a circular plate. A hole 6a is formed in the first plate 6. The workpiece holding unit 5 is connected to the heat insulating mechanism 4 by use of the hole 6a formed in the first plate 6. For example, a shank portion of a bolt is screwed into the hole 6a formed in the first plate 6.

The plurality of fins 7 are arranged side by side along the outer periphery of the first plate 6 such that respective plate surfaces of the fins 7 are radially arranged as viewed along the Z-axis. In addition, the plurality of fins 7 are arranged in such a way as to avoid an area within a certain distance from the center of the first plate 6 as viewed along the Z-axis. It should be noted that the arrangement of the plurality of fins 7 is not limited thereto, as long as, according to the present invention, space is formed between the plate surfaces of the fins 7 so as to let air through. For example, the plate surfaces of the fins 7 may be arranged side by side in such a way as to be parallel to each other. The plurality of fins 7 is formed by use of a high thermal conductivity material. The high thermal conductivity material to be used for the plurality of fins 7 is exemplified by metal materials such as aluminum, copper, and stainless steel.

The second plate 8 is a circular plate as with the first plate 6. The second plate 8 is formed by use of a high thermal conductivity material. The high thermal conductivity material to be used for the second plate 8 is exemplified by metal materials such as aluminum, copper, and stainless steel. It should be noted that the thermal conductivity of a material forming the first plate 6 is equal to or lower than the thermal conductivities of the materials forming the second plate 8 and the fins 7. In addition, the thermal resistance of the first plate 6 is equal to or higher than the thermal resistance of the second plate 8. A surface of the second plate 8 facing the laser emission unit 10 is a holding surface for holding a workpiece to be described below. The holding surface of the second plate 8 is formed as a flat surface so as to secure adhesion to the workpiece.

A workpiece 9 is placed on the second plate 8. The workpiece 9 is fixed on the holding surface of the second plate 8 by a bolt or a clamping mechanism (not illustrated). Laser light is emitted from the laser emission unit 10 toward the workpiece 9. The wire supply unit 43 feeds the wire 44 to be used as a material for a shaped object 45 to be described below. The wire supply unit 43 feeds the tip of the wire 44 onto an optical path of the laser light.

The tip portion of the wire 44 is irradiated with the laser emitted from the laser emission unit 10. As a result of laser irradiation, the tip of the wire 44 melts and coagulates on the workpiece 9. The shaped object 45 is formed in a desired shape on the workpiece 9 by use of the melted wire 44 as a material, as a result of repeatedly coagulating the wire 44 melted at a desired position on the workpiece 9.

The emission-unit drive unit 42 moves the laser emission unit 10 and the wire supply unit 43. The emission-unit drive unit 42 is assumed to be capable of moving the laser emission unit 10 and the wire supply unit 43 in a direction along the X-axis, a direction along the Y-axis, and a direction along the Z-axis. The additive manufacturing processing machine 50 causes the shaped object 45 to be formed by repeatedly melting and coagulating the wire 44 while moving the laser emission unit 10 and the wire supply unit 43.

In the additive manufacturing processing machine 50 described above, a high-temperature material melted by receiving thermal energy from the laser light remains as the shaped object 45 on the workpiece 9. The workpiece 9 continuously receives thermal energy from the shaped object 45 on the workpiece 9. As a result, the temperature of the workpiece 9 may reach a high temperature of 1000°C or more in some cases.

Heat accumulated in the workpiece 9 is conducted to the second plate 8 of the workpiece holding unit 5 in contact with the workpiece 9. The second plate 8 and the plurality of fins 7 in contact therewith are formed of materials having high thermal conductivities. Therefore, the heat conducted to the second plate 8 is efficiently conducted to the plurality of fins 7. The heat having reached the plurality of fins 7 is released from the surfaces of the fins 7 to the surrounding environment by convection heat transfer and radiation.

Meanwhile, heat is less likely to be conducted to the metal pallet 3 in contact with the heat insulating mechanism 4, the chuck 2, and the movable table 1, due to the heat insulating mechanism 4 with high thermal resistance. As a result, it is possible to prevent parts and the like used for the movable table 1 from being damaged by heat. For example, parts to be used with grease, such as bearings, used for the movable table 1 may cause damage such as seizure at high temperature. This is because the viscosity of the grease decreases and the grease melts when temperature becomes high. Meanwhile, in the additive manufacturing processing machine 50 according to the first embodiment, the second plate 8 and the plurality of fins 7 serve to improve efficiency in heat release. In addition, the first plate 6 and the heat insulating mechanism 4 serve to reduce heat conduction to the movable table 1 and the like. Therefore, it is possible to prevent an increase in the temperature of the parts used in the additive manufacturing processing machine 50. As a result, it is possible to prevent damage to the parts used in the additive manufacturing processing machine 50. It should be noted that if the thermal conductivity of the first plate 6 is reduced to a value lower than the thermal conductivity of the plurality of fins 7, thermal resistance can be further increased by the first plate 6 and the heat insulating mechanism 4. Thus, it is possible to further prevent damage to the parts.

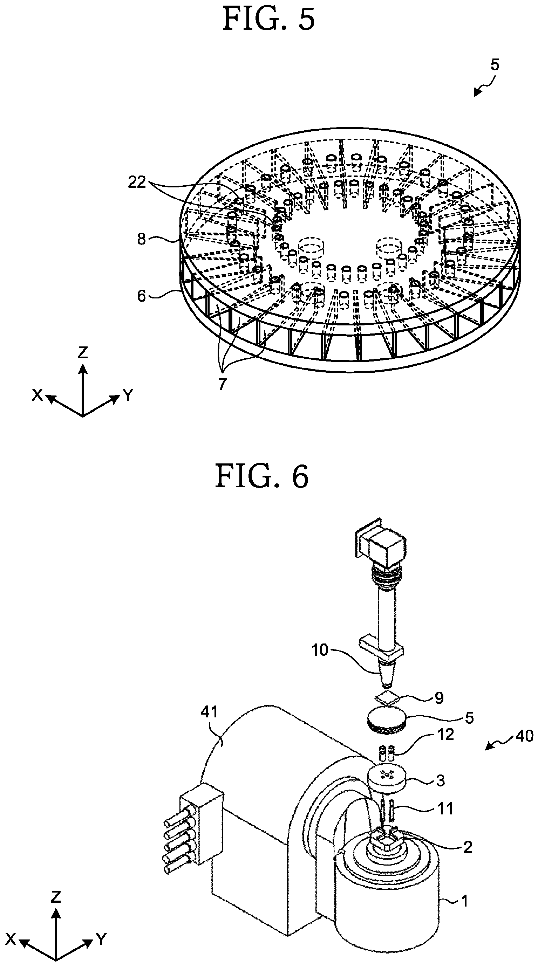

FIG. 5 is a diagram illustrating a variation of the workpiece holding unit in the first embodiment. A plurality of holes 22 is formed in the second plate 8 in the workpiece holding unit 5 illustrated in FIG. 5. The plurality of holes 22 is a plurality of through holes penetrating the second plate 8 toward the surface on which the fins 7 are provided. In the example illustrated in FIG. 5, the holes 22 are formed in such a way as to align along a double circle concentric with the second plate 8, as viewed along the Z-axis. Furthermore, the holes 22 formed along the inside of the double circle penetrate the second plate 8 toward an area where the fins 7 are not provided. The holes 22 formed along the outside of the double circle penetrate the second plate 8 toward space between the fins 7.

Air having received heat from the surfaces of the fins 7 between the first plate 6 and the second plate 8 moves upward due to buoyancy caused by reduced density as a result of an increase in temperature. The holes 22 provided in the second plate 8 serve as vents of the air moving upward. Therefore, the flow of air between the first plate 6 and the second plate 8 is activated. This increases the speed of air flowing in the vicinity of the surfaces of the fins 7. As a result, efficiency is improved in releasing heat from the fins 7 to air.

In addition, if a plurality of holes is also formed in the first plate 6, the holes serve as air inlets to space between the first plate 6 and the second plate 8. This further activates the flow of air between the first plate 6 and the second plate 8. Furthermore, low-temperature air having not received heat from the fins 7 flows in through the holes provided in the first plate 6. Thus, it is possible to reduce the temperature of the air between the first plate 6 and the second plate 8. Therefore, efficiency in heat release from the fins 7 to air is further improved.

Improvement in efficiency in heat release from the fins 7 to air reduces heat to be conducted to the movable table 1. It is thus possible to further prevent damage to the parts used in the additive manufacturing processing machine 50.

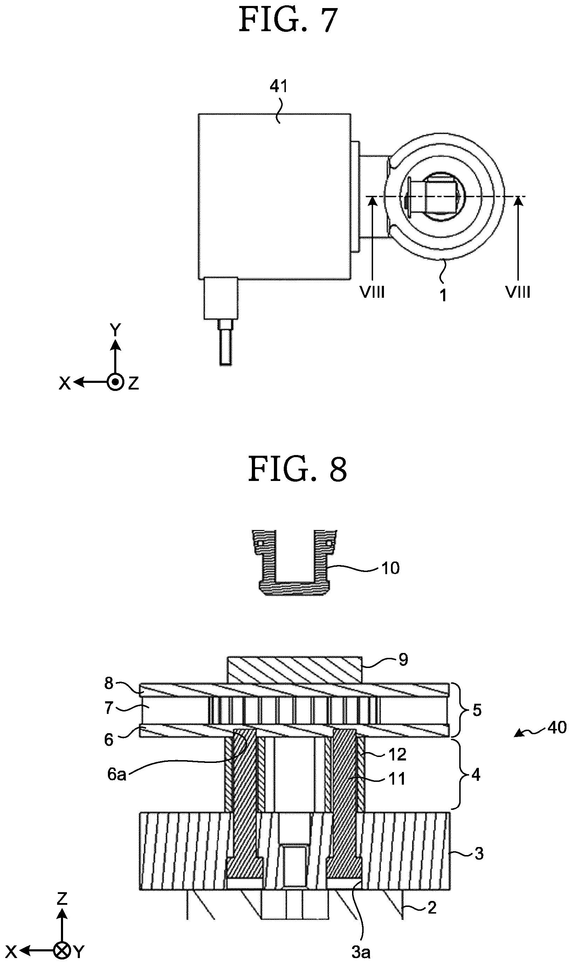

FIG. 6 is a view of a variation of the support unit in the first embodiment, and is a perspective view of the support unit which has been disassembled. FIG. 7 is a plan view of the support unit according to the variation of the first embodiment. FIG. 8 is a cross-sectional view taken along line VIII-VIII illustrated in FIG. 7. In the present variation, the heat insulating mechanism 4 includes a bolt 11 and a spacer 12. Both the bolt 11 and the spacer 12 are formed of materials having low thermal conductivities. The material having a low thermal conductivity is exemplified by, for example, zirconia.

A hole 3a is formed in the metal pallet 3. The bolt 11 is inserted into the hole 3a from the chuck 2 side. A step is formed inside the hole 3a so as to prevent the bolt 11 from falling off toward the heat insulating mechanism 4. The step is formed such that the head of the bolt 11 is caught by the step.

The spacer 12 has a tubular shape. The shank portion of the bolt 11 having passed through the hole 3a of the metal pallet 3 is inserted into the spacer 12. The tip of the shank portion of the bolt 11 having passed through the spacer 12 is screwed into the hole 6a formed in the first plate 6 of the workpiece holding unit 5. As a result, the workpiece holding unit 5 is fixed to the metal pallet 3 such that the spacer 12 is interposed between the metal pallet 3 and the workpiece holding unit 5.

In the support unit 40 according to the present variation, the shank portion of the bolt 11 and the spacer 12 form a path for conducting heat from the workpiece holding unit 5 to the metal pallet 3. The bolt 11 and the spacer 12 are formed of the low thermal conductivity materials as described above. Therefore, it is possible to increase the thermal resistance between the workpiece holding unit 5 and the metal pallet 3. In addition, the cross-sectional area of the path for conducting heat from the workpiece holding unit 5 to the metal pallet 3 can be reduced since the path for conducting heat is formed by the shank portion of the bolt 11 and the spacer 12. Thus, it is possible to increase the thermal resistance between the workpiece holding unit 5 and the metal pallet 3.

Consequently, conduction of heat to the movable table 1 and the like is reduced, so that it is possible to prevent an increase in the temperature of the parts used in the additive manufacturing processing machine 50. As a result, it is possible to prevent damage to the parts used in the additive manufacturing processing machine 50.

Furthermore, the workpiece holding unit 5 can be fixed to the metal pallet 3 by use of the bolt 11 as a part of the heat insulating mechanism 4. It is thus possible to reduce the number of parts. It should be noted that although the spacer 12 having a tubular shape has been cited as an example, it is also possible to use a solid spacer through which the shank portion of the bolt 11 cannot pass. In the case of using the solid spacer, the spacer just needs to be disposed at a position separate from the shank portion of the bolt 11 as viewed along the Z-axis.

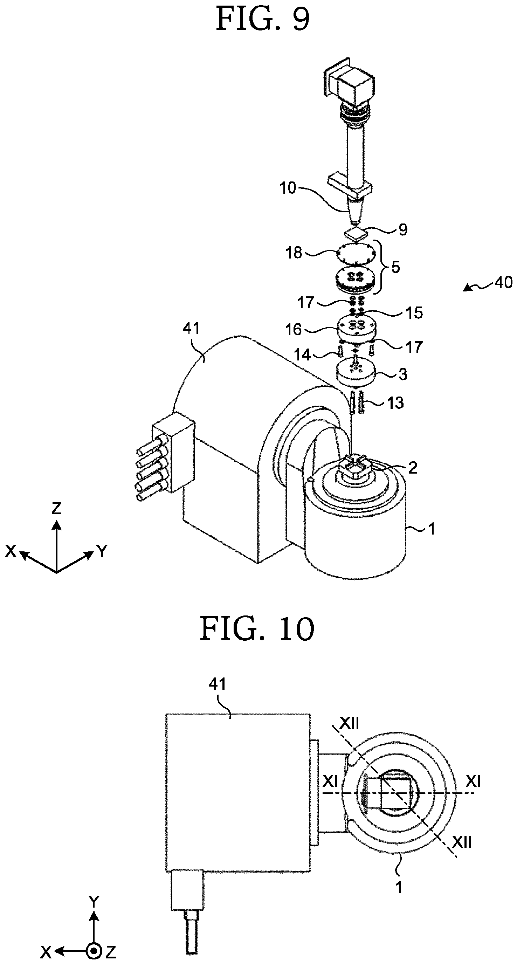

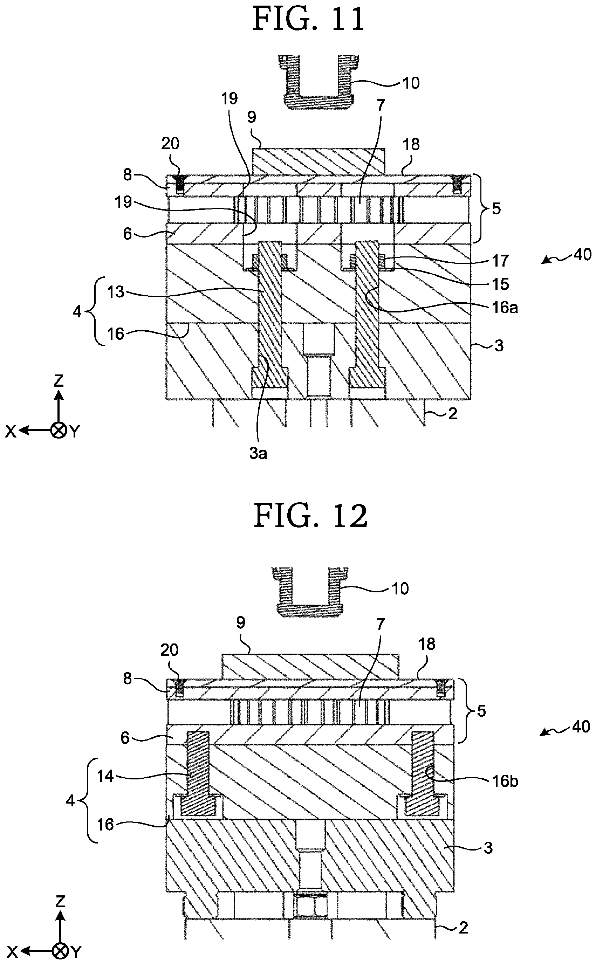

FIG. 9 is a view of another variation of the support unit in the first embodiment, and is a perspective view of the support unit which has been disassembled. FIG. 10 is a plan view of the support unit according to the another variation of the first embodiment. FIG. 11 is a cross-sectional view taken along line XI-XI illustrated in FIG. 10. FIG. 12 is a cross-sectional view taken along line XII-XII illustrated in FIG. 10.

In the support unit 40 according to the another variation, the heat insulating mechanism 4 includes a heat insulating material 16, a bolt 13, and a bolt 14. The heat insulating material 16 is sandwiched between the metal pallet 3 and the workpiece holding unit 5. The heat insulating material 16 has a cylindrical shape. The cross-sectional shape of the heat insulating material 16 is similar to the cross-sectional shapes of the metal pallet 3 and the first plate 6 of the workpiece holding unit 5. The heat insulating material 16 is formed of a low thermal conductivity material. The low thermal conductivity material is, for example, ceramic or brick.

A hole 16a and a hole 16b are formed in the heat insulating material 16. The shank portion of the bolt 13 passes through the hole 16a. The shank portion of the bolt 14 passes through the hole 16b. The metal pallet 3 and the heat insulating material 16 are fastened by the bolt 13 with its shank portion having passed through the hole 3a formed in the metal pallet 3 and the hole 16a formed in the heat insulating material 16. A washer 15 and a nut 17 are attached to the tip of the shank portion of the bolt 13 so as to fasten the metal pallet 3 and the heat insulating material 16.

A hole 19 is formed in each of the first plate 6 and the second plate 8 of the workpiece holding unit 5 so that a tool is inserted into the hole 19 when the washer 15 and the nut 17 are attached to the tip of the shank portion of the bolt 13. As a result of the formation of the hole 19 in the second plate 8 on which the workpiece 9 is placed, there are cases where there is not a sufficient area of contact between the workpiece 9 and the second plate 8, resulting in a lack of stability of the workpiece 9 on the second plate 8. Therefore, a third plate 18 may be attached onto the second plate 8 after the washer 15 and the nut 17 are attached to the tip of the shank portion of the bolt 13, as illustrated in FIG. 11. The third plate 18 has no hole formed in an area where the workpiece 9 is to be placed. For example, the third plate 18 is attached to the second plate 8 by use of a screw 20. It should be noted that as with the holes 22 illustrated in FIG. 5, ventilation holes penetrating the second plate 8 and the third plate 18 may be formed in the second plate 8 and the third plate 18.

The tip of the shank portion of the bolt 14 having passed through the hole 16b formed in the heat insulating material 16 is screwed into the hole 6a formed in the first plate 6, so that the heat insulating material 16 and the workpiece holding unit 5 are fastened.

In the support unit 40 according to the another variation, the bolt 13 for fastening the metal pallet 3 and the heat insulating material 16 is provided separately from the bolt 14 for fastening the heat insulating material 16 and the workpiece holding unit 5. Therefore, heat is not directly conducted from the workpiece holding unit 5 to the metal pallet 3 via the bolt 13 or 14. That is, heat conducted from the workpiece holding unit 5 to the bolt 14 is conducted to the metal pallet 3 via the heat insulating material 16. In addition, a part of heat conducted from the workpiece holding unit 5 to the heat insulating material 16 is conducted to the metal pallet 3 via the bolt 13. Thus, the heat insulating material 16 necessarily lies on the heat transfer path.

Therefore, even when the bolts 13 and 14 are not formed of materials having low thermal conductivities as in the variation illustrated in FIGS. 6 to 8, it is possible to increase the thermal resistance between the workpiece holding unit 5 and the metal pallet 3.. Consequently, conduction of heat to the movable table 1 and the like is reduced, so that it is possible to prevent an increase in the temperature of the parts used in the additive manufacturing processing machine 50. As a result, it is possible to prevent damage to the parts used in the additive manufacturing processing machine 50.

In addition, it is possible to secure a larger area of contact between the metal pallet 3 and the heat insulating material 16 and a larger area of contact between the heat insulating material 16 and the workpiece holding unit 5 than in the variation illustrated in FIGS. 6 to 8. Thus, the workpiece holding unit 5 is stably supported. This can prevent unstableness of the workpiece holding unit 5. It is possible to increase accuracy in forming the shaped object 45 via the workpiece 9 on the workpiece holding unit 5 by preventing unstableness of the workpiece holding unit 5.

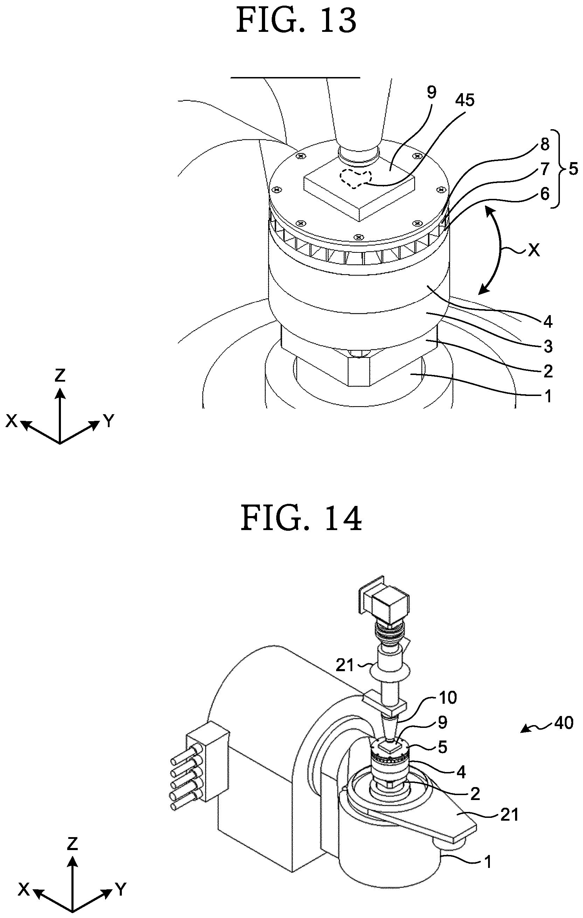

FIG. 13 is a diagram for describing a method for cooling a shaped object in the additive manufacturing processing machine according to the first embodiment. After forming the shaped object 45 on the workpiece 9, the movable table 1 rotates the support unit 40 by rotating a portion to which the chuck 2 is connected, as indicated by an arrow X in FIG. 13. At this time, the support unit 40 may be rotated clockwise or counterclockwise.

As the support unit 40 rotates, the flow of air between the first plate 6 and the second plate 8 is activated by centrifugal force. In particular, when the holes are formed in the first plate 6 and the second plate 8, air flows in between the first plate 6 and the second plate 8 through the holes. As a result, air smoothly flows from between the first plate 6 and the second plate 8 due to centrifugal force.

Thus, it is possible to efficiently release heat from the workpiece 9 and the shaped object 45 via the second plate 8 and the fins 7 due to activation of the flow of air between the first plate 6 and the second plate 8, caused by rotation of the support unit 40. That is, it is possible to promote cooling of the workpiece 9 and the shaped object 45 by rotating the support unit 40.

After completion of forming a shape, the shaped object 45 and the workpiece 9 need to be removed from the workpiece holding unit 5 and sent to the next process so as to perform additional work such as flash removal. However, immediately after completion of forming a shape, the temperatures of the shaped object 45 and the workpiece 9 are very high. Therefore, it is necessary to secure time for cooling the shaped object 45 and the workpiece 9 so that the temperatures thereof decrease to a certain level.

The additive manufacturing processing machine 50 according to the first embodiment can promote cooling of the workpiece 9 and the shaped object 45 by rotating the support unit 40. It is thus possible to reduce cooling time, so that the workpiece 9 and the shaped object 45 can be sent to the next process earlier. As a result, it is possible to improve production efficiency of the shaped object 45.

FIG. 14 is a view of still another variation of the support unit in the first embodiment. The support unit 40 according to the still another variation includes an air exhaust duct 21 disposed in at least one of an area surrounding the chuck 2 and an area surrounding the laser emission unit 10. It is possible to effectively discharge, to the outside, air heated to a high temperature as a result of receiving heat released from the fins 7, by providing the air exhaust duct 21 in the area surrounding the chuck 2. This reduces the ambient temperature of air surrounding the additive manufacturing processing machine 50, and improves an effect of protecting, from damage, movable parts vulnerable to high temperature, such as bearings, used for the movable table 1. For example, as illustrated in FIG. 1, there are cases where air is discharged from an opening formed in a wall provided behind the laser emission unit 10. Thus, as compared with the case where air is discharged from an opening distant from the laser emission unit 10, air heated to a high temperature as a result of receiving heat released from the fins 7 can be discharged to the outside before being diffused.

In addition, it is possible to achieve an effect of protecting parts vulnerable to high temperature, connected to the laser emission unit 10, from damage by providing the air exhaust duct 21 in the area surrounding the laser emission unit 10.

It should be noted that in FIG. 14, a part of the air exhaust duct 21 is omitted for illustration. Actually, the air exhaust duct 21 extends to the outside of the range of the additive manufacturing processing machine 50, so that high-temperature air can be discharged to the outside.

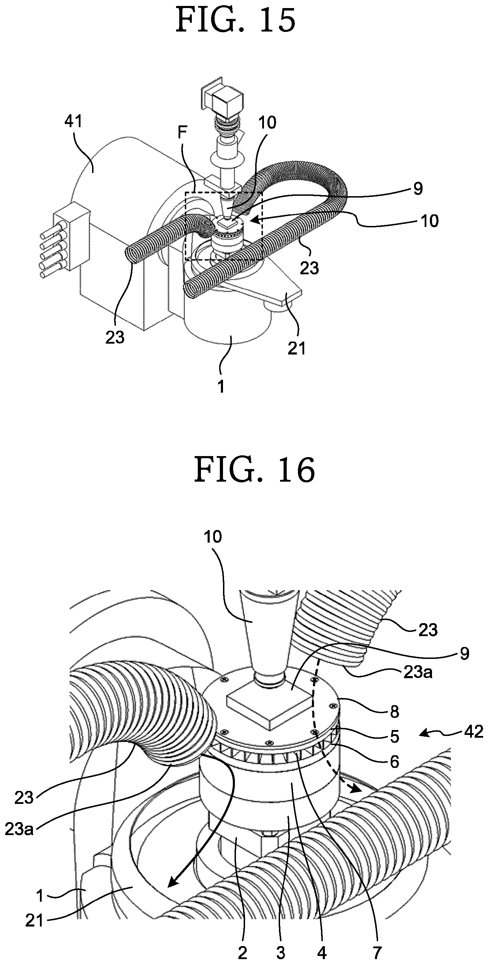

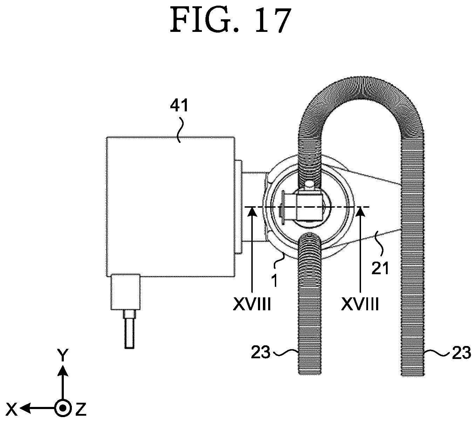

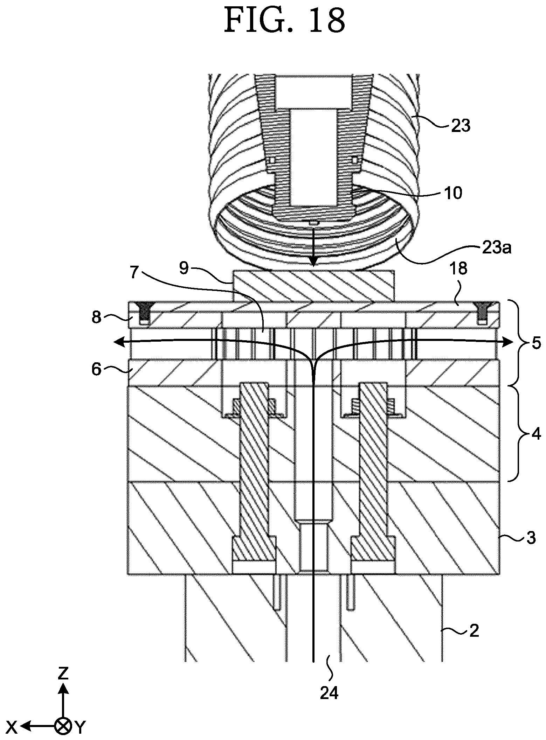

FIG. 15 is a perspective view of the support unit of the additive manufacturing processing machine according to the first embodiment, and is a diagram illustrating an example of providing air intake ducts. FIG. 16 is an enlarged view of a portion F illustrated in FIG. 15. FIG. 17 is a plan view of the support unit of the additive manufacturing processing machine according to the first embodiment, and is a diagram illustrating the example of providing the air intake ducts. FIG. 18 is a cross-sectional view taken along line XVIII-XVIII illustrated in FIG. 17. It should be noted that arrows in the drawings indicate the flow of air.

In the example illustrated in FIGS. 15 to 18, there is provided a plurality of air intake ducts 23. The plurality of air intake ducts 23 each includes an outlet 23a directed onto the second plate 8. Furthermore, the air exhaust duct 21 that discharges air is provided in such a way as to surround the chuck 2. The amount of air to be blown from the plurality of air intake ducts 23 is assumed to be substantially equal to the amount of air to be discharged from the air exhaust duct 21.

The additive manufacturing processing machine 50 is covered with a cover (not illustrated). In the example illustrated in FIG. 14, air is taken into space surrounding the support unit 40 through a gap in the cover. In this case, a point where air is taken in cannot be controlled. This may prevent air from being stably supplied to the space surrounding the support unit 40.

Meanwhile, air is supplied by the air intake ducts 23 in the example illustrated in FIGS. 15 to 18. This enables air to be stably supplied to the space surrounding the support unit 40. Furthermore, it is possible to intensively supply air to a high-temperature spot by directing the outlet 23a of the air intake duct 23 to the workpiece 9 and the shaped object 45 heated to a high temperature. It is thus possible to efficiently cool the workpiece 9 and the shaped object 45 heated to a high temperature.

In addition, if the air intake duct 23 has a bellows-like structure, it is easy to adjust the direction of the outlet 23a. It should be noted that FIG. 18 also illustrates an example of forming an airflow path 24 that penetrates the chuck 2, the metal pallet 3, the heat insulating mechanism 4, and the first plate 6. The airflow path 24 causes air to be blown into a central area between the first plate 6 and the second plate 8. The air blown through the airflow path 24 is blown onto the fins 7.

For example, the airflow path 24 may be provided instead of providing the air intake duct 23. Alternatively, the air intake duct 23 may be provided instead of providing the airflow path 24. In addition, both the air intake duct 23 and the airflow path 24 may be provided.

Next, described below is a relationship between the intake amount or discharge amount of air and the amount of heat input due to laser light emitted from the laser emission unit 10. Here, let V [L/min] be the intake amount or discharge amount of air, and Q [W] be the amount of heat input due to laser light. Then, the following holds:

$$V \geq 0.512 \times Q.$$

An increase in air temperature is expressed as

$$q = 60000 \times Q/(\Delta T \times \rho \times Cp) \; [L/min],$$

where q [L/min] is a required air flow rate, $\Delta T$ [K] is a target temperature increase, Q [W] is the amount of heat input due to laser light, $\rho$ [kg/m$^3$] is the density of air, and Cp [J/(kg·K)] is the constant pressure specific heat of air. In general, it is often the case that electronic components such as a capacitor can be continuously used at a temperature of 125°C.

Here, assume that the temperature of the environment where the additive manufacturing processing machine 50 is installed is 25°C, which is normal temperature. Then, if $\Delta T = 100$ K or less, it is possible to satisfy the temperature at which general electronic components can be continuously used. In this case, values of $\rho$ and Cp are as follows: $\rho \approx 1.166$ [kg/m$^3$] and Cp$\approx$1006 [J/(kg·K)]. Thus, if the following holds:

$$q > 6000 \times Q/(100 \times 1.166 \times 1006) \approx 0.512 \times Q \; [L/min],$$

the temperature of air can be maintained at 125°C or lower, and electronic components of the additive manufacturing processing machine 50 can be used at a temperature equal to or lower than the temperature at which the electronic components can be continuously used.

The configuration illustrated in the above embodiment illustrates an example of the subject matter of the present invention, and it is possible to combine the configuration with another technique that is publicly known, and is also possible to make omissions and changes to part of the configuration without departing from the scope of the present invention as defined in the appended claims.

Reference Signs List

1 movable table; 2 chuck; 3 metal pallet; 4 heat insulating mechanism; 5 workpiece holding unit; 6 first plate; 6a hole; 7 fin; 8 second plate; 9 workpiece; 10 laser emission unit; 11, 13, 14 bolt; 12 spacer; 15 washer; 16 heat insulating material; 17 nut; 21 air exhaust duct; 22 hole; 23 air intake duct; 23a outlet; 40 support unit; 41 table drive unit; 42 emission-unit drive unit; 43 wire supply unit; 44 wire; 45 shaped object; 50 additive manufacturing processing machine.

**Claims**

1. An additive manufacturing processing machine (50) comprising:

   a laser emission unit (10) to emit laser light;
   a material supply unit (43) to supply a material to be melted by the laser light to an optical path of the laser light; and
   a workpiece holding unit (5) capable of holding a workpiece (9) on which a shaped object (45) is to be formed by the material molten by the laser light,
   **characterized in that**
   the workpiece holding unit (5) includes:

   a first plate (6); a second plate (8) provided closer to the laser emission unit (10) than the first plate (6);
   a plurality of fins (7) having plate surfaces, and the fins (7) being sandwiched between the first plate (6) and the second plate (8);
   a space is formed between the plate surfaces of the plurality of fins (7) so as to let air through; and
   a thermal conductivity of the first plate (6) is equal to or lower than thermal conductivities of the second plate (8) and the fins (7).

2. The additive manufacturing processing machine (50) according to claim 1, wherein a through hole (22) is formed in at least one of the first plate (6) and the second plate (8).

3. The additive manufacturing processing machine (50) according to claim 1 or 2, further comprising:

   a heat insulating mechanism (4) connected to the workpiece holding unit (5) on a side opposite to the laser emission unit (10); and
   a pallet (3) connected to the heat insulating mechanism (4) such that the heat insulating mechanism (4) is interposed between the pallet (3) and the workpiece holding unit (5).

4. The additive manufacturing processing machine (50) according to claim 3,
   wherein
   the heat insulating mechanism (4) includes: a bolt (11) that passes through the pallet (3) toward the workpiece holding unit (5), the bolt (11) having a shank portion a tip of which is screwed into the first plate (6); and a spacer (12) sandwiched between the first plate (6) and the pallet (3), and
   the bolt (11) and the spacer (12) are formed of materials having thermal conductivities lower than the thermal conductivities of the second plate (8) and the fins (7).

5. The additive manufacturing processing machine (50) according to claim 3, wherein the heat insulating mechanism (4) is formed of a material having a thermal conductivity lower than the thermal conductivities of the second plate (8) and the fins (7), and the heat insulating mechanism (4) includes: a heat insulating material (16) sandwiched between the first plate (6) and the pallet (3); a bolt (11) to fasten the heat insulating material (16) and the first plate (6); and a bolt (13) to fasten the heat insulating material (16) and the pallet (3).

6. The additive manufacturing processing machine (50) according to any one of claims 3 to 5, further comprising: a movable table (1) to rotate the pallet (3).

7. The additive manufacturing processing machine (50) according to any one of claims 3 to 6, further comprising:

   a chuck (2) to which the pallet (2) is fixed; and
   an air exhaust duct (21) to discharge air, the air exhaust duct (21) being disposed in at least one of an area surrounding the chuck (2) and an area surrounding the laser emission unit (10).

8. The additive manufacturing processing machine (50) according to claim 7, further comprising: an air intake duct (23) to blow air in between the laser emission unit (10) and the workpiece holding unit (5), an amount of the blown air being equal to an amount of the air discharged from the air exhaust duct (21).

9. The additive manufacturing processing machine (50) according to claim 7 or 8, wherein when V [L/min] denotes an amount of air to be taken in through the air intake duct (23) or an amount of air to be discharged from the air exhaust duct (21) and Q [W] denotes an amount of heat input due to the laser light, a following expression holds:

$$V \geq 0.512 \times Q.$$

10. A cooling method using the additive manufacturing processing machine (50) according to any one of claims 1 to 9, comprising:
    rotating the workpiece holding unit (5) after forming the shaped object (45).

**Patentansprüche**

1. Eine Verarbeitungsmaschine zur additiven Fertigung (50), umfassend:

   eine Laseremissionseinheit (10) zur Emission von Laserlicht;
   eine Materialzuführungseinheit (43) zum Zuführen eines Materials, das durch das Laserlicht zu schmelzen ist, zu einem optischen Pfad des Laserlichts; und
   eine Werkstückhalteeinheit (5), die in der Lage ist, ein Werkstück (9) zu halten, an dem ein geformtes Objekt (45) durch das durch das Laserlicht geschmolzene Material zu bilden ist,
   **dadurch gekennzeichnet, dass**
   die Werkstückhalteeinheit (5) umfasst:

eine erste Platte (6); eine zweite Platte (8), die näher an der Laseremissionseinheit (10) angeordnet ist als die erste Platte (6);

eine Mehrzahl von Finnen (7), die Plattenflächen aufweisen, wobei die Finnen (7) zwischen der ersten Platte (6) und der zweiten Platte (8) sandwichartig angeordnet sind;

wobei ein Raum zwischen den Plattenflächen und der Mehrzahl von Finnen (7) ausgebildet ist, um Luft durchzulassen; und

eine thermische Leitfähigkeit der ersten Platte (6) gleich oder kleiner ist als die thermischen Leitfähigkeiten der zweiten Platte (8) und der Finnen (7).

2. Die Verarbeitungsmaschine zur additiven Fertigung (50) nach Anspruch 1, wobei ein Durchgangsloch (22) in der ersten Platte (6) und/oder der zweiten Platte (8) ausgebildet ist.

3. Die Verarbeitungsmaschine zur additiven Fertigung (50) nach Anspruch 1 oder 2, ferner umfassend:

einen Wärmeisolationsmechanismus (4), der mit der Werkstückhalteeinheit (5) auf einer der Laseremissionseinheit (100) gegenüberliegenden Seite verbunden ist; und

eine Palette (3), die mit dem Wärmeisolationsmechanismus (4) so verbunden ist, dass der Wärmeisolationsmechanismus (4) zwischen der Palette (3) und der Werkstückhalteeinheit (5) angeordnet ist.

4. Die Verarbeitungsmaschine zur additiven Fertigung (50) nach Anspruch 3, wobei
der Wärmeisolationsmechanismus (4) umfasst: einen Bolzen (11), der durch die Palette (3) hin zu der Werkstückhalteeinheit (5) reicht, wobei der Bolzen (11) einen Schaftbereich aufweist, dessen Spitze in die erste Platte (6) geschraubt ist; und einen Abstandhalter (12), der zwischen der ersten Platte (6) und der Palette (3) sandwichartig angeordnet ist, und
wobei der Bolzen (11) und der Abstandhalter (12) aus Materialien gebildet sind, die thermische Leitfähigkeiten aufweisen, die kleiner sind als die thermischen Leitfähigkeiten der zweiten Platte (8) und der Finnen (7).

5. Die Verarbeitungsmaschine zur additiven Fertigung (50) nach Anspruch 3, wobei der Wärmeisolationsmechanismus (4) aus einem Material gebildet ist, das eine thermische Leitfähigkeit aufweist, die kleiner ist als die thermischen Leitfähigkeiten der zweiten Platte (8) und der Finnen (7), und wobei der Wärmeisolationsmechanismus (4) umfasst: ein wärmeisolierendes Material (16), das zwischen der ersten Platte (6) und der Palette (3) sandwichartig angeordnet ist; einen Bolzen (11), um das wärmeisolierende Material (16) und die erste Platte (6) zu befestigen; und einen Bolzen (13), um das wärmeisolierende Material (16) und die Palette (3) zu befestigen.

6. Die Verarbeitungsmaschine zur additiven Fertigung (50) nach einem der Ansprüche 3 bis 5, ferner umfassend: einen bewegbaren Tisch (1), um die Palette (3) zu rotieren.

7. Die Verarbeitungsmaschine zur additiven Fertigung (50) nach einem der Ansprüche 3 bis 6, ferner umfassend:

ein Futter (2), an dem die Palette (2) befestigt ist; und
ein Luftabführungsrohr (21), um Luft abzuführen, wobei das Luftabführungsrohr (21) in einem das Futter (2) umgebenden Bereich und/oder einem die Laseremissionseinheit (10) umgebenden Bereich angeordnet ist.

8. Die Verarbeitungsmaschine zur additiven Fertigung (50) nach Anspruch 7, ferner umfassend: ein Lufteinlassrohr (23), um Luft zwischen die Laseremissionseinheit (10) und die Werkstückhalteeinheit (5) zu blasen, wobei eine Menge der geblasenen Luft gleich einer Menge der von dem Luftabführungsrohr (21) abgeführten Luft ist.

9. Die Verarbeitungsmaschine zur additiven Fertigung (50) nach Anspruch 7 oder 8, wobei, wenn V [L/min] eine Menge an Luft angibt, die durch das Lufteinlassrohr (23) einzulassen ist, oder eine Menge an Luft, die durch das Luftabführungsrohr (21) abzuführen ist, und Q [W] eine Menge an Wärme bezeichnet, die aufgrund des Laserlichts angegeben wird, der folgende Ausdruck gilt:

$$V \geq 0{,}512 \times Q.$$

10. Ein Kühlverfahren unter Verwendung der Verarbeitungsmaschine zur additiven Fertigung (50) gemäß einem der Ansprüche 1 bis 9, umfassend:
Drehen der Werkstückhalteeinheit (5) nach dem Formen des geformten Objekts (45).

**Revendications**

1. Machine de traitement de fabrication additive (50) comprenant :

   une unité d'émission laser (10) pour émettre une lumière laser ;
   une unité d'alimentation en matériau (43) pour alimenter un trajet optique de la lumière laser en matériau devant être fondu par la lumière laser ; et
   une unité de maintien de pièce (5) capable de maintenir une pièce (9) sur laquelle un objet façonné (45) doit être formé par le matériau fondu par la lumière laser, **caractérisée en ce que** l'unité de maintien de pièce (5) comporte :

   une première plaque (6) ;

   une seconde plaque (8) fournie plus près de l'unité d'émission laser (10) que la première plaque (6) ;

   une pluralité d'ailettes (7) ayant des surfaces de plaque, et les ailettes (7) étant enserrées entre la première plaque (6) et la seconde plaque (8) ;
   un espace étant formé entre les surfaces de plaque de la pluralité d'ailettes (7) de manière à laisser passer l'air ; et
   une conductivité thermique de la première plaque (6) étant égale ou inférieure aux conductivités thermiques de la seconde plaque (8) et des ailettes (7).

2. Machine de traitement de fabrication additive (50) selon la revendication 1, un trou traversant (22) étant formé dans la première plaque (6) et/ou la seconde plaque (8).

3. Machine de traitement de fabrication additive (50) selon la revendication 1 ou 2, comprenant en outre :

   un mécanisme d'isolation thermique (4) relié à l'unité de maintien de pièce (5) sur un côté opposé à l'unité d'émission laser (10) ; et
   une palette (3) reliée au mécanisme d'isolation thermique (4) de telle sorte que le mécanisme d'isolation thermique (4) est interposé entre la palette (3) et l'unité de support de pièce (5).

4. Machine de traitement de fabrication additive (50) selon la revendication 3, le mécanisme d'isolation thermique (4) comportant : un boulon (11) qui passe à travers la palette (3) vers l'unité de maintien de pièce (5), le boulon (11) ayant une partie de tige dont l'extrémité est vissée dans la première plaque (6) ; et une entretoise (12) enserrée entre la première plaque (6) et la palette (3), et
   le boulon (11) et l'entretoise (12) étant formés de matériaux ayant des conductivités thermiques inférieures aux conductivités thermiques de la seconde plaque (8) et des ailettes (7).

5. Machine de traitement de fabrication additive (50) selon la revendication 3, le mécanisme d'isolation thermique (4) étant formé d'un matériau ayant une conductivité thermique inférieure aux conductivités thermiques de la seconde plaque (8) et des ailettes (7), et le mécanisme d'isolation thermique (4) comportant : un matériau d'isolation thermique (16) enserré entre la première plaque (6) et la palette (3) ; un boulon (11) pour fixer le matériau d'isolation thermique (16) et la première plaque (6) ; et un boulon (13) pour fixer le matériau d'isolation thermique (16) et la palette (3).

6. Machine de traitement de fabrication additive (50) selon l'une quelconque des revendications 3 à 5, comprenant en outre : une table mobile (1) pour mettre la palette (3) en rotation.

7. Machine de traitement de fabrication additive (50) selon l'une quelconque des revendications 3 à 6, comprenant en outre :

   un mandrin (2) auquel la palette (2) est fixée ; et
   un conduit d'évacuation d'air (21) pour évacuer l'air, le conduit d'évacuation d'air (21) étant disposé dans une zone entourant le mandrin (2) et/ou une zone entourant l'unité d'émission laser (10).

8. Machine de traitement de fabrication additive (50) selon la revendication 7, comprenant en outre : un conduit d'admission d'air (23) pour produire un débit d'air entre l'unité d'émission laser (10) et l'unité de maintien de pièce (5), une quantité d'air soufflé étant égale à une quantité d'air évacué du conduit d'évacuation d'air (21).

9. Machine de traitement de fabrication additive (50) selon la revendication 7 ou 8, lorsque V [L/min] désigne une quantité d'air à aspirer à travers le conduit d'admission d'air (23) ou une quantité d'air à évacuer du conduit d'évacuation d'air (21) et Q [W] désigne une quantité de chaleur apportée par la lumière laser, une expression suivante étant valable :

$$V \geq 0{,}512 \text{ x } Q.$$

10. Procédé de refroidissement à l'aide de la machine de traitement de fabrication additive (50) selon l'une quelconque des revendications 1 à 9, comprenant :
la mise en rotation de l'unité de maintien de pièce (5) après avoir formé l'objet façonné (45).

# FIG. 1

# FIG. 2

# FIG. 3

# FIG. 4

# FIG. 5

# FIG. 6

# FIG. 7

# FIG. 8

# FIG. 9

# FIG. 10

# FIG. 11

# FIG. 12

# FIG. 13

# FIG. 14

# FIG. 15

# FIG. 16

# FIG. 17

# FIG. 18

**EP 3 666 451 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60103588 A
- US 4851061 A
- WO 2017103849 A1
- WO 9629192 A1